# EUROPÄISCHE PATENTANMELDUNG

(11) **EP 2 192 576 A1**
(43) Veröffentlichungstag der Anmeldung: **02.06.2010**
(21) Anmeldenummer: 09013304.2
(22) Anmeldetag: 21.10.2009
(51) Int. Cl.: G10L 17/00, G06F 21/00, H04L 29/06

(54) **Stimmbasierte Authentisierung mit Abwehr von Angriffen mittels Sprachkonserven**

(30) Priorität: 26.11.2008 DE 102008058883
(71) Anmelder: VOICE.TRUST AG, 81379 München (DE)
(72) Erfinder: Pilz, Christian, 80797 München (DE)
(74) Vertreter: Heinze, Ekkehard

(57) **Zusammenfassung**

Gegenstand der vorliegenden Anmeldung ist ein Verfahren und eine entsprechende Anordnung zur Steuerung des Nutzerzugriffs auf einen Dienst und/oder Informationen. Dabei handelt es sich insbesondere um ein Verfahren mittels biometrie-basierter Authentisierung in Form von Stimme. Bei auf den Eigenarten der menschlichen Stimme und Sprache beruhenden Authentifizierungs- und Zugriffssteuersystemen besteht grundsätzlich das Problem, dass diese bis zu einem gewissen Grad mit vorgefertigten Aufnahmen von Sprachproben betrogen werden können.
Die Erfindung basiert auf dem wesentlichen Gedanken, dass der menschlichen Stimme zeitliche Variationen eigen sind, so dass niemand eine sprachliche Äußerung vollkommen identisch wiederholen kann. Daraus ergibt sich im Kontext der hier in Rede stehenden Zugriffssteuersysteme das eine aktuell eingegebene Sprachprobe, wenn sie tatsächlich aktuell gesprochen und nicht als Sprachkonserve eingespielt wird, nicht vollkommen identisch mit einer früher eingegebenen und im System gespeicherten Sprachprobe sein kann und auch die aus den jeweiligen Sprachproben errechneten Stimmprofile nicht vollständig identisch sein können. Demzufolge wird das aktuelle, aus der Eingabe einer Sprachprobe eines Nutzers gewonnene, Stimmprofil mit einem in einer Autorisierungsdatenbasis gespeicherten Stimmprofil verglichen, indem ein Ähnlichkeitsmass ermittelt wird und der Zugriff nur dann gestattet wird, wenn ein vorbestimmtes Ähnlichkeitsmass nicht überschritten wird.

## Beschreibung

Die Erfindung bezieht sich auf ein Verfahren sowie eine Anordnung zur Steuerung eines Nutzerzugriffs auf einen in einem Datennetz bereitgestellten Dienst oder auf in einer Nutzdatenbasis gespeicherte Information im allgemeinen Sinne, worunter speziell auch in Prepaid- bzw. Kreditkartensystemen gespeicherter Daten zu verstehen sind.

In herkömmlichen Zugriffssteuersystemen, wie sie in Datennetzen zum Einsatz kommen, werden Identifizierungs- bzw. Authentisierungsmittel des wissens-basierten Typs eingesetzt, um die Sicherheitsanforderungen zu erfüllen. Insbesondere sind seit Jahrzehnten passwort-basierte oder PIN-basierte Identifizierungs-/Authentisierungsabläufe bekannt und im allgemeinen Einsatz. Spezieller sind in spionage- oder missbrauchs-sensitiven Anwendungen, wie etwa in Homebanking-Anwendungen, zusätzliche Sicherheitsmaßnahmen, wie das Vorsehen und die obligatorische Nutzung individueller Transaktionscodes oder TANs, bekannt und werden breit eingesetzt. Auch solche zusätzlichen sicherheitserhöhenden Abläufe sind wissens-basiert und leiden daher unter den typischen Nachteilen aller wissens-basierten Systeme, d.h. einerseits unter Problemen, die mit dem Verlust der relevanten Informationen durch den autorisierten Nutzer zusammenhängen, und andererseits Risiken, die sich aus dem Zugriff auf derartige Information durch einen unautorisierten Nutzer ergeben.

Daher wurden in den letzten Jahren beträchtliche Anstrengungen unternommen, um andere Typen von Identifizierungs-/Authentisierungsabläufen in die Sicherheitsmechanismen von Datennetzen einzubauen. Insbesondere werden Ansätze verfolgt, um "besitz-basierte" Mechanismen (Tokens) und/oder "seins"-basierte (biometrie-basierte) Mechanismen den bekannten wissens-basierten Mechanismen hinzuzufügen. Beispielsweise sind bei Geldautomaten biometrische Authentisierungsabläufe, beruhend auf einer Fingerabdruck- oder Retina-Erkennung, zur Steuerung des Zugriffs auf Bankkonten vorgeschlagen worden. Weiterhin sind die mittlerweile etablierten fingerabdruck-basierten Zugriffssteuereinrichtungen von Notebooks und anderen PCs als eine spezielle Art von Mitteln zur Steuerung des Zugriffs zu Datennetzen erwähnt werden.

In jüngerer Zeit sind stimmbasierte Authentisierungs-Lösungen als ein spezieller Typ von biometrie-basierten Identifizierungen/Authentisierungen bereits durch Firmen eingeführt worden, um ihre internen wissens-basierten Zugriffssteuermechanismen zu ergänzen.

Bei Internet- und Mobilfunk-basierten Diensten und Aktivitäten, insbesondere auf Internet-Marktplätzen wie Ebay oder in Finanz-Transaktionssystemen des Internet wie PayPal wächst mit der weltweit schnell ansteigenden Anzahl von Nutzern die Anzahl betrügerischer Attacken signifikant an. Die Wahrscheinlichkeit eines erfolgreichen Angriffs auf Konten eines weltweiten Internet-basierten Dienstes mit Millionen von Nutzern ist viel höher als diejenige von Phishing-Attacken auf lokale Banken.

Mittlerweile haben Systemprovider wie PayPal und Ebay auf die wachsende Anzahl von Angriffen reagiert, indem sie ein Hardware-Token als zweite Sicherheitsebene für Nutzerkonten eingeführt haben. In kürzlich entwickelten Lösungen dieser Art wird davon ausgegangen, dass ein individueller Sicherheitscode, der periodisch erzeugt wird, den Nutzer vor betrügerischem Missbrauch des persönlichen Kontos schützen kann.

Diese kürzlich entwickelten Mechanismen leiden darunter, dass sie eine zusätzliche Kostenbelastung mit sich bringen, die durch die Provider und/oder die Nutzer zu tragen ist, sowie unter den typischen Nachteilen von besitz-basierten Identifizierungs-/Authentisierungsmitteln.

Mit der Bereitstellung einer relativ leicht zu implementierenden und unter Kostengesichtspunkten attraktiven Verbesserung der Zugriffssteuerung zu Datennetzen befasst sich die DE 10 2007 014 885 A1 der Anmelderin, die im Übrigen weitere verbesserte Zugriffssteuerverfahren in verschiedenen Nutzungs-Umgebungen zum Patent angemeldet hat.

Bei auf den Eigenarten der menschlichen Stimme und Sprache beruhenden Authentifizierungs- und Zugriffssteuersystemen besteht grundsätzlich das Problem, dass diese bis zu einem gewissen Grad mit vorgefertigten Aufnahmen von Sprachproben betrogen werden können. Um dem entgegenzuwirken, werden beim sogenannten Challenge-Response-Verfahren Proben aus einem Reservoir vorab definierter Sprachproben in einer Authentifizierungs-Situation stochastisch ausgewählt, wobei auch die Anzahl und Reihenfolge der bei der Authentifizierung aktuell einzugebenden Sprachproben jeweils erst in der konkreten Authentifizierungs-Situation festgelegt wird. Dies erschwert in der praktischen Nutzung ein Betrügen des Zugriffssteuersystems zwar erheblich, kann aber einen Betrug nicht ausschließen, sofern dem Betrüger der gesamte "Pool" der in einer Initialisierungsphase trainierten Sprachproben als Aufnahme zur Verfügung steht und ihm eine ausreichend schnelle Reaktion auf die Aufforderungen der Benutzerführung gelangt. Hierbei ist zu beachten, dass in der Praxis aus Gründen der Nutzerakzeptanz das Reservoir bzw. der "Pool" von bei der Initialisierung bzw. dem Training genutzten Sprachproben nur klein ist.

Auch im Kontext von Stimmprofil-basierten Zugriffssteuersystemen ist daher jüngst der Gedanke aufgegriffen worden, neben aktuellen Sprachproben zusätzliche Authentifizierungsmittel für eine "sichere" Authentifizierung des einen Zugriff begehrenden Nutzers heranzuziehen (unveröffentlichte deutsche Patentanmeldung Nr. 10 2007 033 812.2 der Anmelderin). Diese zusätzlichen Authentifizierungsmittel werden durch die Nutzer aber tendenziell als störend empfunden und können die grundsätzlich hohe Nutzerakzeptanz dieser Systeme beeinträchtigen.

Der Erfindung liegt daher die Aufgabe zugrunde, ein verbessertes Verfahren und eine entsprechende Anordnung der o.g. Art anzugeben, die ohne zusätzliche Authentifizierungsmittel einen sehr hohen Grad an Erkennungssicherheit ermöglichen und damit unberechtigte Dienst- bzw. Datenzugriffe weitestgehend ausschließen können.

Diese Aufgabe wird in ihrem Verfahrensaspekt durch ein Verfahren mit den Merkmalen des Anspruchs 1 und in ihrem Vorrichtungsaspekt durch eine Anordnung mit den Merkmalen des Anspruchs 11 gelöst. Zweckmäßige Fortbildungen des Erfindungsgedankens sind Gegenstand der jeweiligen abhängigen Ansprüche.

Die Erfindung basiert auf dem wesentlichen Gedanken, dass der menschlichen Stimme zeitliche Variationen eigen sind, so dass niemand eine sprachliche Äußerung vollkommen identisch wiederholen kann. Daraus ergibt sich im Kontext der hier in Rede stehenden Zugriffssteuersysteme, das eine aktuell eingegebene Sprachprobe, wenn sie tatsächlich aktuell gesprochen und nicht als Sprachkonserve eingespielt wird, nicht vollkommen identisch mit einer früher eingegebenen und im System gespeicherten Sprachprobe sein kann und auch die aus den jeweiligen Sprachproben errechneten Stimmprofile nicht vollständig identisch sein können. Da selbstverständlich auch zwischen den durch zwei verschiedene Personen gelieferten Sprachproben keine Identität besteht und die Systeme ja gerade dazu dienen, "Fremde" (also mit dem berechtigten Nutzer nicht identische Personen) von einem Systemzugriff auszuschließen, ist die Nicht-Identität für sich allein allerdings kein brauchbares Kriterium einer Zugriffssteuerung.

Während es aber der Kerngedanke bisheriger Systeme war, dass ein vorbestimmtes Maß an Ähnlichkeit eines aktuell ermittelten Stimmprofils mit einem gespeicherten Stimmprofil bei einer Authentifizierung nicht unterschritten werden sollte, wird dieses Konzept nunmehr um den Gedanken ergänzt, einen weiteren (oberen) Schwellwert der Ähnlichkeit der sprachlichen Äußerungen einzuführen, der für die Gewährung eines Zugriffs nicht überschritten werden sollte. Technisch wird dieses Konzept durch die Berechnung eines Ähnlichkeitsmaßes von miteinander zu vergleichenden Stimmprofilen bzw. Sprachproben und eine anschließende Schwellwertdiskriminierung an einem oberen Schwellwert umgesetzt.

Hinzuweisen ist darauf, dass natürlich eine technische Aufzeichnung und Wiedergabe von Sprache ebenfalls zu gewissen Veränderungen (sog. Kanalvariationen und Kanalrauschen) führt, also ebenfalls eine Nicht-Identität von aktuell eingegebener und gespeicherter (physiologisch identischer) Sprachprobe zur Folge hat. Derartige technische Abweichungen haben aber andere Charakteristika als die natürliche Variation der Sprache und lassen sich daher von jenen auf der Basis eines ausreichend großen Messdatenbestandes recht zuverlässig unterscheiden. Im Kontext des vorgeschlagenen Verfahrens funktioniert die Unterscheidung weitgehend durch geeignete Auswahl des Algorithmus zur Bestimmung des Ähnlichkeitsmaßes; des Weiteren kann eine geeignete (bevorzugt dynamische) Festlegung des Schwellwertes hierzu wesentlich beitragen.

Mit dem vorgeschlagenen Verfahren wird ein Mechanismus bereitgestellt, der Betrugsversuche an einem sprach- bzw. stimmbasierten Authentifizierungssystem mittels Sprachkonserven erkennen und abwehren kann. Hervorzuheben ist, dass die Systemsicherheit hierdurch wesentlich erhöht werden kann, ohne dass ein höherer Initialisierungs- bzw. Trainingsaufwand erforderlich wäre, der erfahrungsgemäß die Nutzerakzeptanz senken würde. Überdies ist die Sicherheit bei der Abwehr von Betrugsversuchen (auch mittels synthetisierter Sprache) höher als bei den erwähnten Challenge-Response-Verfahren, die zudem zu Lasten der Nutzerakzeptanz gehen. Das vorgeschlagene Verfahren erhöht insbesondere die Brauchbarkeit von sprachbasierten Zugriffssteuersystemen für sensitive Anwendungen (Content-Verwaltung, Brokerage, sensitive Datenbasen...) weiter, und das leicht verständliche Konzept trägt zu einer hohen Akzeptanz durch potentielle Systembetreiber bei.

Für einen sinnvollen Systembetrieb mit hoher Nutzerakzeptanz ist es vorteilhaft, wenn der obere Schwellwert des Ähnlichkeitsmaßes dynamisch aufgrund mehrerer gespeicherter Stimmprofile eines Nutzers und/oder vieler Nutzer und/oder mehrerer aktuell eingegebener Sprachproben bestimmt wird. Mit fortschreitendem Ausbau des Systems und auch zunehmender Anzahl von Zugriffen durch einen speziellen Nutzer wird das Sicherheitsniveau immer höher, zugleich ist aber auch bei noch geringem Systemumfang und speziell bei den ersten Zugriffen eines einzelnen Nutzers bereits ein sinnvoller Systembetrieb möglich, ohne vom Nutzer ein allzu umfangreiches Enrollment verlangen zu müssen.

In diesem Sinne kann vorgesehen sein, dass sowohl das initiale als auch jedes weitere, bei einem Zugriffsversuch des Nutzers ermittelte Stimmprofil gespeichert wird. Insbesondere kann hierbei laufend oder bei einem aktuellen Zugriffsversuch aus den gespeicherten Stimmprofilen ein aktueller oberer Schwellwert des Ähnlichkeitsmaßes bestimmt werden. Fernerhin kann auch das aktuelle Stimmprofil mit mehr als einem der gespeicherten Stimmprofile verglichen, aus den Vergleichsergebnissen ein mittleres aktuelles Ähnlichkeitsmaß bestimmt und dieses mittlere aktuelle Ähnlichkeitsmaß der Schwellwertdiskriminierung unterzogen werden.

In einer weiteren Ausführung ist vorgesehen, dass als Ähnlichkeitsmaß ein Abstandsmaß zwischen dem aktuellen und einem gespeicherten Stimmprofil berechnet wird, wobei insbesondere eine Likelihood-Betrachtung eingeschlossen sein kann. Die Abstandsermittlung erfolgt im Sinne des Bayes-Entscheidungstheorems für das 2-Klassen-Problem, und das Abstandsmaß kann im Sinne der Kullback-Leibler-Distanz verstanden werden. Abstandsmessungen in diesem Sinne und Likelihood-Betrachtungen können kombiniert sein, insbesondere in dem Sinne, dass die Entscheidung, ob ein Zugriff suchender Nutzer eine behauptete Identität hat, unter Ausführung einer Abstandsmessung zwischen den beiden Sprechermodellen getroffen wird, während die Prüfung des eventuellen Vorliegens einer Sprachkonserve aufgrund einer Likelihood-Betrachtung ausgeführt wird. Weitere Ausführungen, auch mit zwei qualitativ verschiedenartigen Abstandsmessungen oder zwei qualitativ verschiedenartigen Likelihood-Betrachtungen für die Lösung der ersten und zweiten Verifizierungs-Teilaufgabe, sind möglich.

Eine weitere Ausgestaltung der Erfindung sieht vor, dass der Sprecher zur aktuellen Eingabe mehrerer gleicher Sprachproben aufgefordert wird und die darauf jeweils gelieferten Sprachproben einer ersten Ähnlichkeitsbewertung und danach, insbesondere in Abhängigkeit von einem Ergebnis der ersten Ähnlichkeitsbewertung, mindestens eine der aktuellen Sprachproben zur Berechnung des aktuellen Stimmprofils genutzt und dieses unter Einschluss einer zweiten Ähnlichkeitsbewertung mit dem oder einem gespeicherten Stimmprofil verglichen wird. Es kann also, je nach konkreter Auslegung des Systems, entweder in einem ersten Schritt bestimmt werden, ob der angebliche Nutzer überhaupt mit hinreichender Sicherheit eine registrierte Person ist, und anschließend ein zweiter Prüfschritt zum Ausschließen eines Betrugsversuches mittels Tonkonserve aus geführt werden, oder es wird in umgekehrter Reihenfolge vorgegangen.

Eine Alternative zu diesem letztgenannten Vorgehen, welches dem Nutzer immerhin eine gewissen Unbequemlichkeit auferlegt, kann dass Verfahren so ausgestaltet sein, dass während der Initialisierung und bei nachfolgenden Zugriffsversuchen vom Nutzer gelieferte Sprachproben gespeichert werden und die aktuell eingegebene Sprachprobe einer Gruppe von ersten Ähnlichkeitsbewertungen unterzogen und danach oder vorher das aus der aktuell eingegebenen Sprachprobe ermittelte Stimmprofil einer zweiten Ähnlichkeitsbewertung mit dem oder einem gespeicherten Stimmprofil unterzogen wird.

Die Sicherheit des Verfahrens kann weiter erhöht werden, wenn eine Benutzerführung ausgegeben wird, die den Nutzer zur Eingabe einer ersten, vorab trainierten, sowie einer zweiten, nicht vorab trainierten, Sprachprobe auffordert, und die erste und zweite Sprachprobe einer kombinierten Ähnlichkeitsbewertung unterzogen werden. Speziell ist hierbei vorgesehen, dass die kombinierte Ähnlichkeitsbewertung die Berechnung eines ersten aktuellen Stimmprofils aus der zweiten Sprachprobe, eine erste und zweiten Ähnlichkeitsbewertung mit einem gespeicherten Stimmprofil zur Gewinnung eines ersten und zweiten Ähnlichkeitsmaßes und einen Vergleichsschritt des ersten und zweiten Ähnlichkeitsmaßes umfasst. Durch die bei dieser Verfahrensführung eingebaute zusätzliche Unwägbarkeit kann der Einsatz einer Tonkonserve zum Betrüben des Systems praktisch mit absoluter Sicherheit ausgeschlossen werden.

Vorrichtungsaspekte der vorgeschlagenen Lösung ergeben sich für den Fachmann ohne Weiteres aus den oben erläuterten Verfahrensaspekten, so dass von einer nochmaligen detaillierten Beschreibung hier Abstand genommen werden kann.

Vorteile und Zweckmäßigkeiten der Erfindung ergeben sich im Übrigen aus den nachfolgenden Erläuterungen bevorzugter Ausführungen anhand der Figuren. Von diesen zeigen:
- Fig. 1: einen ersten beispielhaften Verfahrensablauf als Flussdiagramm,
- Fig. 2: einen zweiten beispielhaften Verfahrensablauf als Flussdiagramm,
- Fig. 3: einen dritten beispielhaften Verfahrensablauf als Flussdiagramm,
- Fig. 4: eine schematische Darstellung einer Ausführungsform der erfindungsgemäßen Anordnung in Art eines Blockschaltbildes, und
- Fig. 5 bis 7: schematische Darstellungen von Ausgestaltungen der erfindungsgemäßen Anordnung.

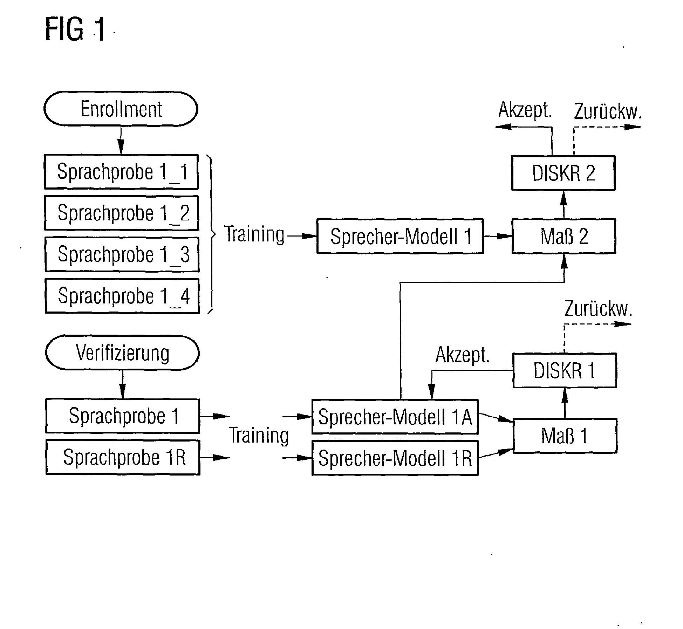

Wie in Fig. 1 dargestellt, wird für einen Nutzer 1 während einer Initialisierungsphase, die bei derartigen Systemen als "Enrollment" bezeichnet wird, aus mehreren - hier vier - sprachlichen Äußerungen bzw. Sprachproben 1_1 bis 1_4 in einem sogenannten Training ein hier als Sprecher-Modell 1 bezeichnetes nutzerspezifisches Stimmprofil errechnet. Im Anwendungsfall, also wenn der Nutzer 1 einen Zugriff zu einem Dienst oder zu Daten begehrt, die von dem System geschützt werden, wird seine Identität mit dem registrierten Nutzer unter Nutzung des gespeicherten Stimmprofils Sprecher-Modell 1 verifiziert bzw., mit anderen Worten, der Nutzer authentifiziert.

Er wird dazu zur Eingabe einer Sprachprobe 1, etwa zum Einsprechen eines ihm zugewiesenen Passwortes, aufgefordert, und aus der vom System aktuell erfassten Sprachprobe wird wiederum in einem Training ein aktuelles Stimmprofil Sprecher-Modell 1A erzeugt. Unmittelbar danach wird der angebliche Nutzer zur nochmaligen Eingabe der gleichen Sprachprobe aufgefordert, und diese liegt dann als Sprachprobe 1R vor. Hieraus wird ein weiteres aktuelles bzw. temporäres Stimmprofil Sprecher-Modell 1R bestimmt, und aus den beiden aktuellen Stimmprofilen Sprecher-Modell 1A und Sprecher-Modell 1R wird ein aktuelles erstes Ähnlichkeitsmaß Maß 1 bestimmt und einer Schwellwertdiskriminierung DISKR 1 mit einem vorbestimmten oberen Schwellwert unterzogen. Wird dieser überschritten, werden die eingegebenen Sprachproben als betrügerisch erzeugte Sprachproben beurteilt, und der Zugriffsversuch wird zurückgewiesen. Wird der obere Schwellwert nicht überschritten, wird die Eingabe der Sprachproben akzeptiert und eines der aktuellen Stimmprofile (in der Figur das Profil Sprecher-Modell 1A) für einen Vergleich mit dem vorgespeicherten Stimmprofil Sprecher-Modell 1 bereitgestellt.

Aus beiden Stimmprofilen wird ein zweites Ähnlichkeitsmaß Maß 2 berechnet, und auch dieses wird einer Schwellwertdiskriminierung DISKR 2 unterzogen, und zwar diesmal an einem vorbestimmten unteren Schwellwert, der anhand einschlägiger Datenbasen errechnet wurde und dessen Überschreitung aufgrund der vorliegenden Systemdaten zu fordern ist, wenn mit hinreichender Sicherheit von einer Identität des Zugriffbegehrenden Sprechers mit dem registrierten Sprecher 1 ausgegangen werden soll. Wird der Schwellwert nicht erreicht, wird ein den Zugriff verweigerndes Steuersignal ausgegeben, andernfalls wird ein den Zugriff gewährendes Steuersignal erzeugt und ausgegeben.

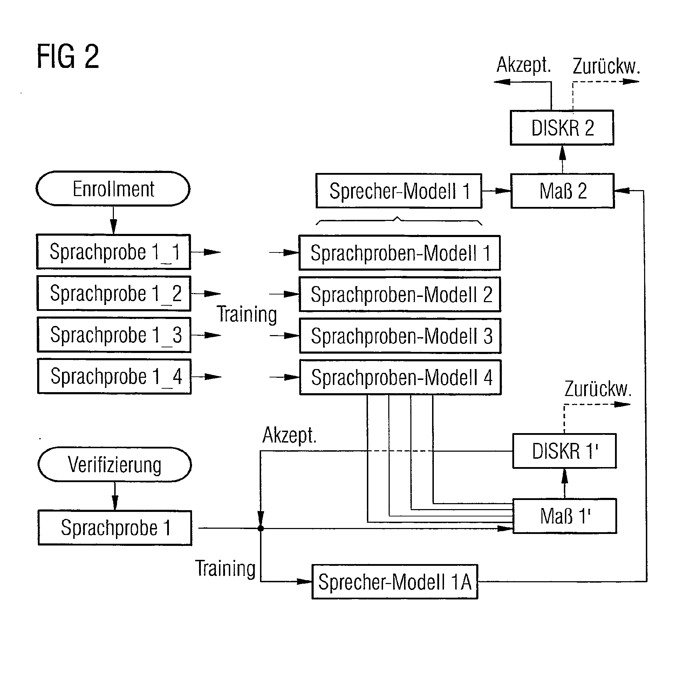

Fig. 2 zeigt eine alternative Verfahrensdurchführung, die möglich wird, wenn für jede sprachliche Äußerung (Sprachprobe) in der Enrollment-Phase ein vorläufiges Auswertungsergebnis Sprachproben-Modell 1 bis Sprachproben-Modell 4 abgelegt wurde. Dann kann nämlich während einer Verifizierungs-Phase auf das mehrfache Einsprechen ein und derselben Sprachprobe verzichtet und stattdessen mit einer einzelnen Sprachprobe 1 gearbeitet werden.

Diese wird mit den Sprechproben-Modellen 1 bis 4 einer Gruppe von ersten Ähnlichkeitsberechnungen unterworfen, in deren zusammenfassender Auswertung sich dann ein mittleres Ähnlichkeitsmaß Maß 1' ergibt. Zeigt dessen Schwellwertdiskriminierung DISKR 1' an einem oberen Schwellwert, dass die Übereinstimmung nicht unzulässig groß ist, wird aus der aktuellen Sprachprobe 1 das aktuelle Stimmprofil Sprecher-Modell 1A berechnet, und es wird eine zweite Ähnlichkeitsbetrachtung im Vergleich zum gespeicherten Stimmprofil Sprecher-Modell 1 angestellt. Das hierbei gelieferte Ähnlichkeitsmaß Maß 2 wird dann, wie bei der Ausführung nach Fig. 1, einer Schwellwertdiskriminierung DISKR 2 an einem vorbestimmten unteren Schwellwert unterzogen, und der begehrte Zugriff wird gewährt, wenn das Maß 2 größer als der untere Schwellwert ist.

Im Hinblick auf die wesentlichen qualitativen Unterschiede einer einzelnen Sprachprobe und eines aus einer Mehrzahl von Sprachproben berechneten Stimmprofils bzw. Sprecher-Modells versteht es sich, dass die ersten und zweiten Ähnlichkeitsberechnungen ebenfalls qualitativ unterschiedlich sind und auch die herangezogenen Schwellwerte bei der ersten und zweiten Schwellwertdiskriminierung aus qualtitativ unterschiedlichen Datenbeständen abgeleitet sein werden.

In der praktischen Anwendung kann es sich empfehlen, die erwähnten Ähnlichkeitsberechnungen und Schwellwertdiskriminierungen in ihrer Reihenfolge umzukehren, also zuerst zu bestimmen, ob überhaupt eine untere Ähnlichkeits-Schwelle erreicht wird, also die behauptete Identität zwischen dem Zugriff begehrenden Nutzer und einem registrierten Sprecher angenommen werden darf, und erst danach die zusätzliche Prüfung durchzuführen, ob dieses Ergebnis möglicherweise durch einen Betrugsversuch durch Einsatz einer Sprachkonserve oder eines Sprachsynthetisators zustande gekommen ist. Damit ändert sich die Systematik des vorgeschlagenen Verfahrens jedoch nicht grundsätzlich.

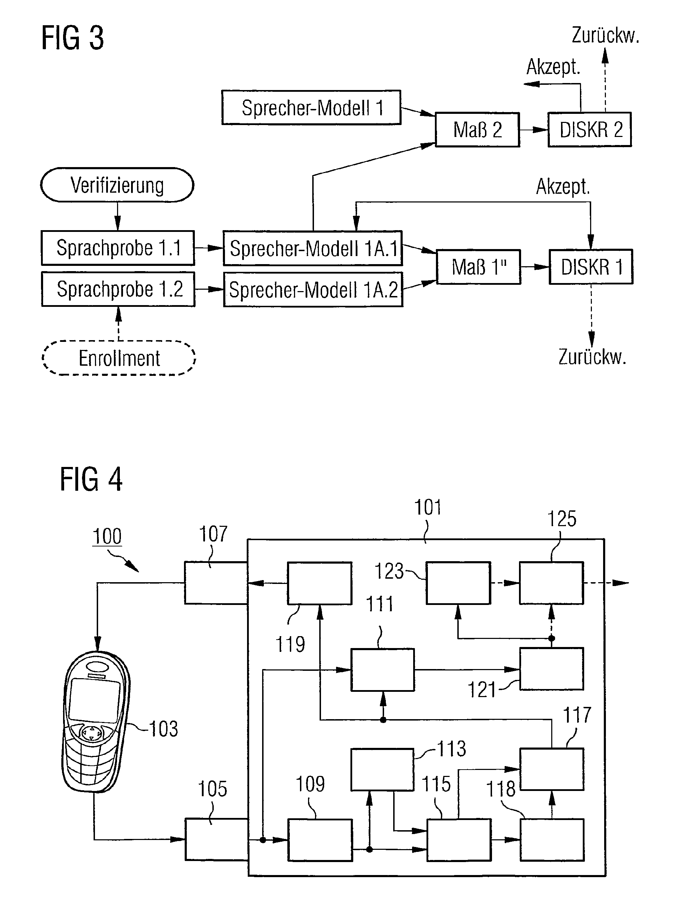

Um auch weiter verfeinerten Betrugsversuchen entgegenwirken zu können, kann die in Fig. 3 skizzierte Abwandlung des Verfahrens praktiziert werden. Die Enrollment-Phase ist in dieser Figur nicht mehr dargestellt, sondern lediglich das in ihrem Ergebnis gewonnene Stimmprofil Sprecher-Modell 1.

Mittels einer geeigneten Benutzerführung wird der zugriffbegehrende Nutzer in der Verifizierungs-Phase zur Eingabe zweier unterschiedlicher Sprachproben Sprachprobe 1.1 und Sprachprobe 1.2 aufgefordert, von denen die eine auf einer Vorgabe beruht, die in der Enrollment-Phase benutzt wurde, während das bei der anderen nicht der Fall ist. Bevorzugt wird eine Eingabe angefordert, die von einer solchen Art ist, dass sie nur schwerlich zum Gegenstand einer vorbereiteten Sprachaufnahme gemacht werden konnte.

Aus beiden Sprachproben wird jeweils ein aktuelles Stimmprofil Sprecher-Modell 1A.1 bzw. Sprecher-Modell 1A.2 errechnet. Es wird ein Ähnlichkeitsmaß Maß 1" zwischen diesen beiden aktuell errechneten Stimmprofilen berechnet und einer Schwellwertdiskriminierung DISKR 1 an einem vorbestimmten oberen Schwellwert unterzogen. Wird der Schwellwert unterschritten, wird vom Vorliegen "live" eingesprochener Sprachproben ausgegangen, und das Verfahren wird fortgeführt. Ansonsten wird abgebrochen und dem Nutzer bereits in dieser Stufe der Zugriff verwehrt.

Im Falle der Fortführung wird das Stimmprofil Sprecher-Modell 1A.1 mit dem beim Enrollment bestimmten Stimmprofil Sprecher-Modell 1 verglichen und ein Ähnlichkeitsmaß Maß 2 errechnet. Dieses wird dann, wie auch bei den vorgenannten Ausführungen des Verfahrens, der Schwellwertdiskriminierung DISKR 2 an einem unteren Schwellwert unterzogen, und bei dessen Überschreitung wird die Identität zwischen dem behaupteten Nutzer und dem registrierten Nutzer unterstellt und ein den Zugriff gewährendes Steuersignal ausgegeben, während bei Unterschreitung Nicht-Identität gefolgert und ein den Zugriff verweigerndes Steuersignal erzeugt wird.

Die oben beschriebenen Verfahrensführungen können auf unterschiedliche Weise auch miteinander kombiniert und in einer solchen Kombination auch bestimmten Vereinfachungen unterzogen werden. So ist es denkbar, die oben als aufeinanderfolgend beschriebenen Schwellwertdiskriminierungen zu einer Art "Bandpass-Diskriminierung" zusammenzuführen, wenn sie sich auf die gleiche Art von Ähnlichkeitsmaß (also entweder jeweils zwischen Sprachproben oder jeweils zwischen Stimmprofilen) beziehen. Es ist auch möglich, die Verfahrensführung mit einer Texterkennung zu kombinieren, um etwa einen unberechtigten Nutzer schon allein aufgrund dessen zurückzuweisen, dass er ein eingefordertes Passwort nicht kennt und stattdessen eine inhaltlich unkorrekte Spracheingabe liefert.

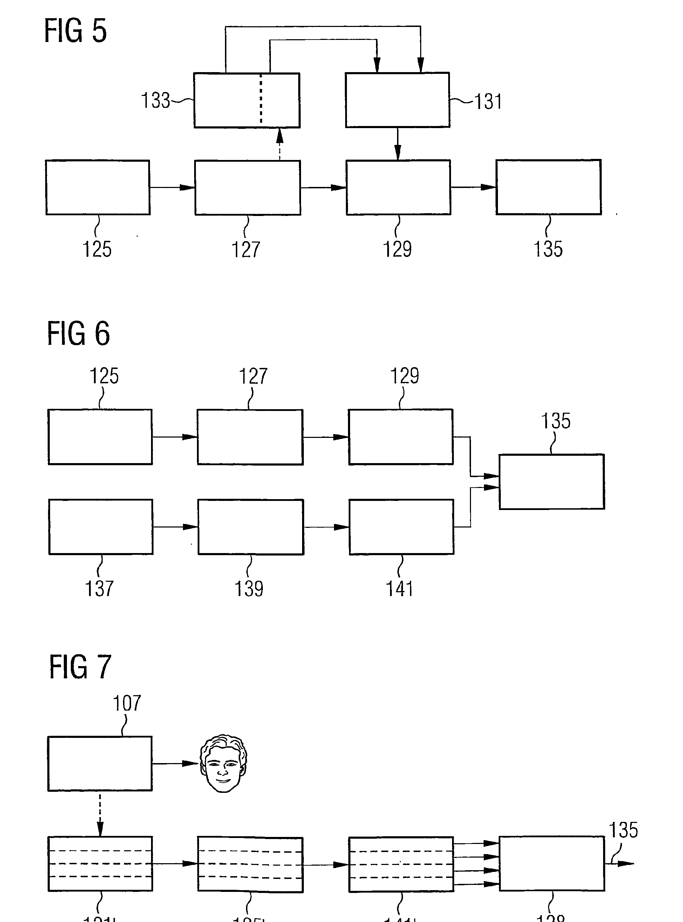

Fig. 4 zeigt schematisch eine Anordnung 100 für eine stimmprofil-basierte Authentifizierung einer Person, in der ein für die Ausführung der Erfindung wesentlicher Abschnitt eines System-Servers 101 in Kommunikationsverbindung mit einem Mobiltelefon 103 eines Nutzers dargestellt ist. Es wird darauf hingewiesen, dass der System-Server 101 neben den in Fig. 4 gezeigten Komponenten und Funktionen weitere, applikations-spezifische und der Ausführung der vorliegenden Erfindung dienende Komponenten und Funktionen enthält bzw. ausführt; vgl. Fig. 5 bis 7.

Der System-Server 101 steht über eine Sprachproben-Eingabeschnittstelle 105 eingangsseitig und über eine Benutzerführungs-Ausgabeschnittstelle 107 ausgangsseitig in zeitweiliger Verbindung mit dem Mobiltelefon 103, um den Benutzer in einer Enrollment- oder Verifizierungs-Prozedur zu führen und ihm die Eingabe mindestens einer Sprachprobe in das System zu ermöglichen. Daneben können weitere Ein-/Ausgabeschnittstellen, etwa für eine Dateneingabe in das System durch Betätigung der Mobiltelefon-Tastatur, vorgesehen sein. Solche sind im Zusammenhang mit der Erläuterung der Erfindung aber nicht erforderlich und werden daher hier nicht gezeigt und beschrieben.

Die Sprachproben-Eingabeschnittstelle 105 ist intern mit einer Spracherkennungseinheit 109 sowie parallel mit einer Sprachproben-Zuführsteuerung 111 jeweils an deren Eingang verbunden. Die Spracherkennungseinheit 109 ist ausgangsseitig zum einen mit einer Gewichtungsfaktor-Speichereinheit 113 und zum anderen mit dem Eingang einer Bewertungskoeffizienten-Berechnungseinheit 115 verbunden. Über einen weiteren Eingang ist die Bewertungskoeffizienten-Berechnungseinheit 115 mit der Gewichtungsfaktor-Speichereinheit 113 verbunden, um von dieser vorgespeicherte Phonem-Gewichtungsfaktoren für diejenigen Phoneme zu empfangen, die sich im Ergebnis der Spracherkennung bzw. phonematischen Analyse der empfangenen Sprachprobe als deren Bestandteile ergeben haben.

Ausgangsseitig ist die Bewertungskoeffizienten-Berechnungseinheit mit einem Berechnungskoeffizienten-Schwellwertdiskriminator (ersten Schwellwert-Diskriminator) 117 verbunden, deren Schwellwert über eine Schwellwert-Einstelleinheit 118 einstellbar ist. Der erste Schwellwert-Diskriminator 117 ist ausgangsseitig einerseits mit einem Steuereingang der Sprachproben-Zuführsteuerung 111 und andererseits mit einer Benutzerführungseinheit 119 verbunden, um im Ergebnis der SchwellwertDiskriminierung in der Berechnungseinheit 115 berechneten phonematischen Bewertungskoeffizienten einerseits die empfangene Sprachprobe entweder einer Stimmprofilanalyse zuzuführen oder zu blockieren und andererseits die Ausgabe einer entsprechenden Benutzerführung (Anforderung einer weiteren Sprachprobe) zu bewirken.

Wird eine neue Sprachprobe benötigt, gibt die Benutzerführungseinheit 119 eine solche im Ansprechen auf das empfangene Steuersignal an die Schnittstelle 107 und über diese in das Mobiltelefon 103 aus. Das beschriebene Procedere wiederholt sich dann. Ist hingegen die empfangene und bewertete Sprachprobe unter dem Gesichtspunkt ihrer phonematischen Bewertung für eine Stimmanalyse (Stimmprofilberechnung) brauchbar, wird sie einer Stimmprofil-Berechnungseinheit 121 zugeführt und hieraus ein Stimmprofil des Nutzers des Mobiltelefons 103 ermittelt. Mit der in der Figur dargestellten Signalverbindung ist illustriert, dass dieses - wie bei einem anfänglichen Enrollment des Nutzers erforderlich - in einer Stimmprofil-Speichereinheit 123 abgelegt wird. Die punktierten Signallinien geben an, dass das Stimmprofil im Falle einer späteren Verifizierung des Nutzers auch einer Stimmprofil-Vergleichereinheit 125 zugeführt werden und in dieser mit einem in der Speichereinheit 123 gespeicherten initialen Stimmprofil verglichen und ein das Vergleichsergebnis kennzeichnendes Ausgangssignal der Vergleichereinheit 125 an nachfolgende Stufen des System-Servers 101 ausgegeben werden kann.

Für die eigentliche phonematische Bewertung sind verschiedene Algorithmen nutzbar. Sie bauen auf den Ergebnissen empirischer Untersuchungen zur "Erkennungsleistung" auf, aus denen sich für die im Rahmen einer Spracherkennung zu gewinnenden Lautbestandteile (Phoneme) von Sprachproben spezifische Gewichtungen ableiten lassen. Neben der erkennungs-bezogenen Qualität der einzelnen Phoneme kann in die Gesamtbewertung einer Sprachprobe auch deren Quantität (Anzahl) einfließen, und dies wird bei Einsatz von Sprachproben unterschiedlicher Länge und gegebenen verarbeitungstechnischen Voraussetzungen vorteilhafterweise auch praktiziert.

In Fig. 5 ist eine Ausgestaltung der Erfindung näher dargestellt, bei der der Stimmprofil-Vergleichereinheit 125 eine Ähnlichkeitsmaß-Berechnungseinheit 127 nachgeschaltet ist, in der aufgrund eines vorbestimmten Algorithmus ein Ähnlichkeitsmaß zwischen einem gespeicherten Stimmprofil eines registrierten Nutzers und einem aus einer neu eingegebenen Sprachprobe errechneten Stimmprofil des (behauptetermaßen) gleichen Nutzers berechnet wird. Der Ähnlichkeitsmaß-Berechnungseinheit 127 ist ein Schwellwertdiskriminator 129 nachgeschaltet, dem ein dynamisch einstellbarer Schwellwert aus einer Schwellwertanpassungsstufe 131 zugeführt wird.

Jene Anpassungsstufe ist eingangsseitig mit einem Ähnlichkeitsmaß-Speicher 133 verbunden, in dem sowohl für den konkreten Nutzer als auch für weitere Nutzer des Systems Daten aus früheren Ähnlichkeitsmaß-Berechnungen abgelegt sind, welche zur Berechnung eines aktuellen Wertes des dynamisch bestimmten Schwellwerts in der Anpassungsstufe 131 herangezogen werden können. Es ist darauf hinzuweisen, dass es sich hierbei um einen oberen Schwellwert handelt, der von dem in der Ähnlichkeitsmaß-Berechnungseinheit 127 errechneten Schwellwert nicht überschritten werden darf, ohne dass der laufende Verifizierungsvorgang als betrugs-verdächtig eingestuft wird. Im Ergebnis der Schwellwertdiskriminierung in dem Schwellwertdiskriminator 129 wird ein Signal an eine Zugriffssteuereinheit 135 ausgegeben, welches entweder eine Gewährung oder Blockierung eines Nutzerzugriffs zum geschützten System auslöst.

Fig. 6 zeigt eine Fortbildung des Systems dahingehend, dass damit nicht nur ein Stimmprofil-Vergleich mit anschließender Schwellwertdiskriminierung (in den Komponenten 125 bis 135), sondern zusätzlich eine Auswertung der Ähnlichkeit zwischen verschiedenen Sprachproben aus einem Verifizierungs-Prozedere oder zwischen Sprachproben, die einerseits aus einem Enrollment und andererseits aus einem Verifizierungs-Zugriff stammen, möglich wird. Dem letztgenannten Teil des Verfahrens dienen eine Sprachproben-Vergleichereinheit 137, eine ihr nachgeschaltete weitere Ähnlichkeitsmaß-Berechnungseinheit 139 sowie ein dieser nachgeschalteter weiterer Schwellwertdiskriminator 141 zur Berechnung und Schwellwertdiskriminierung eines Ähnlichkeitsmaßes zwischen Sprachproben.

Ausgangsseitig ist der weitere Schwellwertdiskriminator 141 in der hier gezeigten Anordnung ebenfalls mit einem Eingang der Zugriffssteuereinheit 135 verbunden - die Einbindung kann aber auch dahingehend modifiziert sein, dass das Ausgangssignal eines der beiden Schwellwertdiskriminatoren 129, 141 der Vergleichereinheit oder der Ähnlichkeitsmaß-Berechnungseinheit des jeweils anderen Berechnungszweiges zugeführt wird, um eine weiterführende Berechnung überhaupt erst dann auszulösen, wenn das Ergebnis einer ersten Schwellwertdiskriminierung nicht von vornherein eine Zurückweisung des Zugriffsversuches erfordert; vgl. dazu die obige Beschreibung zu Fig. 1 bis 3.

Fig. 7 zeigt eine weitere Modifikation der erfindungsgemäßen Anordnung, wobei die Benuterführungs-Ausgabeschnittstelle 107 so ausgestaltet ist, dass sie an den Nutzer Eingabeaufforderungen zur Lieferung mehrerer Sprachproben ausgibt und zugleich eine mehrkanalige Verarbeitung in einer entsprechend modifizierten Stimmprofil-Berechnungseinheit 121' und Stimmprofil-Vergleichereinheit 125' auslöst. Der mehrkanaligen Stimmprofil-Vergleichereinheit 125 ist eine entsprechend mehrkanalig ausgeführte Ähnlichkeitsmaß-Berechnungseinheit 127' nachgeschaltet, und deren Ausgänge sind mit einer Ähnlichkeitsmaß-Vergleichereinheit 128 verbunden, in der mehrere in den einzelnen Kanälen berechnete Ähnlichkeitsmaße einem Vergleich miteinander unterzogen werden. Ausgangsseitig ist die Ähnlichkeitsmaß-Vergleichereinheit 128 dann wieder mit der Zugriffssteuereinheit 135 (vgl. Fig. 5 und 6) verbunden und löst im Ergebnis des Vergleiches der verschiedenen parallel verarbeiteten Ähnlichkeitsmaße die Gewährung oder Blockierung des Zugriffs des (positiv oder negativ) verifizierten Nutzers zum geschützten System aus.

Die Ausführung der Erfindung ist nicht auf die oben erläuterten Beispiele und hervorgehobenen Aspekte beschränkt, sondern ebenso in einer Vielzahl von Abwandlungen möglich, die im Rahmen fachgemäßen Handelns liegen.

## Patentansprüche

1. Verfahren zur Steuerung eines Nutzerzugriffs auf einen in einem Datennetz bereitgestellten Dienst und/oder in einer Nutzdatenbasis gespeicherte Information, um gespeicherte Nutzdaten gegen unberechtigten Zugriff zu schützen, wobei das Verfahren aufweist:
Eingeben einer Sprachprobe des Nutzers an einem Nutzer-Datenendgerät, Verarbeiten der Sprachprobe des Nutzers, um eine aufbereitete Sprachprobe sowie ein aktuelles Stimmprofil des Nutzers zu erhalten,
Vergleichen des aktuellen Stimmprofils mit einem in einer Autorisierungsdatenbasis gespeicherten initialen Stimmprofil und
Ausgeben eines Zugriffssteuersignals zur Gewährung oder Verweigerung eines Zugriffs unter Berücksichtigung des Ergebnisses des Vergleichsschrittes, wobei
der Vergleichsschritt eine quantitative Ähnlichkeitsbewertung des aktuellen und des gespeicherten Stimmprofils und eine Schwellwertdiskriminierung eines ermittelten Ähnlichkeitsmaßes einschließt und eine die Gewährung des Zugriffs auslösendes Zugriffssteuersignal nur dann erzeugt wird, wenn ein vorbestimmtes Ähnlichkeitsmaß nicht überschritten ist.

2. Verfahren nach Anspruch 1, wobei der obere Schwellwert des Ähnlichkeitsmaßes dynamisch aufgrund mehrerer gespeicherter Stimmprofile eines Nutzers und/oder vieler Nutzer und/oder mehrerer aktuell eingegebener Sprachproben bestimmt wird.

3. Verfahren nach Anspruch 1 oder 2, wobei der Sprecher zur aktuellen Eingabe mehrerer gleicher Sprachproben aufgefordert wird und die darauf jeweils gelieferten Sprachproben einer ersten Ähnlichkeitsbewertung und danach oder vorher mindestens eine der aktuellen Sprachproben zur Berechnung des aktuellen Stimmprofils genutzt und dieses unter Einschluss einer zweiten Ähnlichkeitsbewertung mit dem oder einem gespeicherten Stimmprofil verglichen wird, wobei insbesondere das Ergebnis der zuerst ausgeführten Ähnlichkeitswertung bestimmt, ob die weitere Ähnlichkeitsbewertung ausgeführt wird.

4. Verfahren nach einem der vorangehenden Ansprüche, wobei sowohl das initiale als auch jedes weitere, bei einem Zugriffsversuch des Nutzers ermittelte Stimmprofil gespeichert wird.

5. Verfahren nach Anspruch 4, wobei laufend oder bei einem aktuellen Zugriffsversuch aus den gespeicherten Stimmprofilen ein aktueller oberer Schwellwert des Ähnlichkeitsmaßes bestimmt wird.

6. Verfahren nach Anspruch 4 oder 5, wobei das aktuelle Stimmprofil mit mehr als einem der gespeicherten Stimmprofile verglichen, aus den Vergleichsergebnissen ein mittleres aktuelles Ähnlichkeitsmaß bestimmt und dieses mittlere aktuelle Ähnlichkeitsmaß der Schwellwertdiskriminierung unterzogen wird.

7. Verfahren nach einem der Ansprüche 1 bis 3, wobei während der Initialisierung und bei nachfolgenden Zugriffsversuchen vom Nutzer gelieferte Sprachproben gespeichert werden und die aktuell eingegebene Sprachprobe einer Gruppe von ersten Ähnlichkeitsbewertungen unterzogen und danach oder vorher das aus der aktuell eingegebenen Sprachprobe ermittelte Stimmprofil einer zweiten Ähnlichkeitsbewertung mit dem oder einem gespeicherten Stimmprofil unterzogen wird.

8. Verfahren nach einem der vorangehenden Ansprüche, wobei eine Benutzerführung ausgegeben wird, die den Nutzer zur Eingabe einer ersten, vorab trainierten, sowie einer zweiten, nicht vorab trainierten, Sprachprobe auffordert, und die erste und zweite Sprachprobe einer kombinierten Ähnlichkeitsbewertung unterzogen werden.

9. Verfahren nach Anspruch 8, wobei die kombinierte Ähnlichkeitsbewertung die Berechnung eines ersten aktuellen Stimmprofils aus der zweiten Sprachprobe, eine erste und zweiten Ähnlichkeitsbewertung mit einem gespeicherten Stimmprofil zur Gewinnung eines ersten und zweiten Ähnlichkeitsmaßes und einen Vergleichsschritt des ersten und zweiten Ähnlichkeitsmaßes umfasst.

10. Verfahren nach einem der vorangehenden Ansprüche, wobei als Ähnlichkeitsmaß ein Abstandsmaß zwischen dem aktuellen und einem gespeicherten Stimmprofil berechnet wird, wobei insbesondere eine Likelihood-Betrachtung eingeschlossen sein kann.

11. Anordnung zur Durchführung des Verfahrens nach einem der vorangehenden Ansprüche, mit
- Sprachproben-Eingabemitteln zum Eingeben von Sprachproben,
- Sprachproben-Verarbeitungsmitteln zum Gewinnen einer aufbereiteten Sprachprobe,
- Sprachproben-Speichermittel zum Speichern aufbereiteter Sprachproben
- Stimmprofil-Berechnungsmitteln zum Ermitteln eines Stimmprofils aus einer eingegebenen Sprachprobe,
- Stimmprofil-Speichermitteln zum Speichern ermittelter Stimmprofile,
- einer Stimmprofil-Vergleichereinheit zum Vergleich verschiedener Stimmprofile, insbesondere von aktuell ermittelten mit gespeicherten Stimmprofilen, und
- einer eingangsseitig mit dem Ausgang der Stimmprofil-Vergleichereinheit verbundenen Zugriffssteuereinheit zur Ausgabe des Zugriffssteuersignals, wobei der Stimmprofil-Vergleichereinheit eine Ähnlichkeitsmaß-Berechnungseinheit zugeordnet ist, welche ausgangsseitig mit einem ersten und zweiten Schwellwertdiskriminator zur Diskriminierung eines errechneten Ähnlichkeitsmaßes an einem unteren und oberen Schwellwert verbunden ist, wobei der Ausgang mindestens eines Schwellwertdiskriminators steuersignalmäßig mit einem Steuereingang der Zugriffssteuereinheit und der Ausgang des anderen Schwellwertdiskriminators ebenfalls steuersignalmäßig mit einem Steuereingang der Zugriffssteuereinheit und/oder einem Betriebssteuereingang des erstgenannten Schwellwertdiskriminators verbunden ist.

12. Anordnung nach Anspruch 11, wobei der erste und/oder zweite Schwellwert-diskriminator dynamisch einstellbar ausgebildet ist.

13. Anordnung nach Anspruch 12, wobei der zweite Schwellwertdiskriminator zur Diskriminierung am oberen Schwellwert über einen Steuereingang mit einer Schwellwertanpassungsstufe verbunden ist, welche ihrerseits mit einem dem speziellen Nutzer zugeordneten Ähnlichkeitsmaß-Speicherbereich und/oder mit anderen Nutzern zugeordneten Ähnlichkeitsmaß-Speicherbereichen verbunden und zur Berechnung eines aktuellen oberen Schwellwerts des Ähnlichkeitsmaßes in Abhängigkeit von bei früheren Vergleichsvorgängen aufgetretenen Ähnlichkeitsmaßen ausgebildet ist.

14. Anordnung nach einem der Ansprüche 11 bis 13, wobei den Sprachproben-Verarbeitungsmitteln eine Sprachproben-Vergleichereinheit nachgeschaltet ist, welche eine zweite Ähnlichkeitsmaß-Berechnungseinheit zugeordnet ist, welche ausgangsseitig mit dem zweiten Schwellwert-diskriminator verbunden ist, wobei die Ähnlichkeitsmaß-Berechnungseinheit der Stimmprofil-Vergleichereinheit als erste Ähnlichkeitsmaß-Berechnungseinheit wirkt und sie ausgangsseitig mit dem ersten Schwellwertdiskriminator verbunden ist.

15. Anordnung nach einem der Ansprüche 11 bis 13, wobei eine Benutzerführungs-Ausgabeeinheit zur Ausgabe von vorbestimmten Sprachprobe-Eingabeaufforderungen vorgesehen ist und die Stimmprofil-Berechnungsmittel und die Stimmprofil-Vergleichereinheit mehrkanalig oder zur sequentiellen unabhängigen Verarbeitung mehrerer aktuell eingegebener Sprachproben unter Bestimmung mehrerer aktueller Ähnlichkeitsmaße ausgebildet sind und wobei der ebenfalls mehrkanalig ausgebildeten oder sequentiell arbeitenden Ähnlichkeitsmaß-Berechnungseinheit ausgangsseitig eine Ähnlichkeitsmaß-Vergleichereinheit zugeordnet ist, welche mehrere der in den einzelnen Kanälen oder sequentiell berechneten Ähnlichkeitsmaße einem Vergleich miteinander unterzieht, und wobei das Zugriffssteuersignal unter Berücksichtigung des Ergebnisses solcher Vergleiche erzeugt wird.
